# EUROPEAN PATENT SPECIFICATION

(11) **EP 1 593 287 B1**
(45) Date of publication and mention of the grant of the patent: **31.10.2012**
(21) Application number: 03798839.1
(22) Date of filing: 30.05.2003
(51) Int. Cl.: H04Q 11/04, H04L 12/56

(54) **APPARATUS, METHOD AND PROGRAM FOR NETWORK TOPOLOGY DISCOVERY UTILIZING DATA LINK LAYER SERVICES**
VORRICHTUNG, VERFAHREN UND PROGRAMM ZUR NETZWERKTOPOLOGIEENTDECKUNG UNTER VERWENDUNG VON DIENSTEN DER VERBINDUNGSSCHICHT
APPAREIL, PROCEDE ET PROGRAMME DE DECOUVERTE DE TOPOLOGIE DE RESEAU AU MOYEN DE SERVICES DE COUCHE LIAISON DE DONNEES

(30) Priority: 04.10.2002 US 416126 P
(43) Date of publication of application: 09.11.2005
(73) Proprietor: Nortel Networks Limited, St. Laurent, QC H4S 2A9 (CA)
(72) Inventor: MCCAULEY, John, Henry, Kanata, Ontario K2M 2H1 (CA); MCCLOSKEY, Gregory, Belfast (GB)
(74) Representative: Rickard, David John
(86) International application number: PCT/CA2003/000814
(87) International publication number: WO 2004/032562

(56) References cited:
- EP-A- 0 348 331
- EP-A- 1 087 573
- WO-A-00/52890
- KATZ H ET AL: "SDH management network: architecture, routing and addressing" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 November 1993 (1993-11-29), pages 223-228, XP010109709 ISBN: 0-7803-0917-0

## Description

### FIELD OF THE INVENTION

The invention relates to a computer readable storage medium holding a program for execution on a host network element in a data network to implement a topology discovery agent. The topology discovery agent sends messages via the data link layer to convey to the one or more remote network elements information about the host network element.

### BACKGROUND OF THE INVENTION

Topology discovery deals with the discovery of physical connectivity at various layers in a data network (optical, section, line etc). Topology discovery is a process by which individual network elements determine connectivity to neighboring network elements. This information can be used by the network element itself, or passed to higher-order entities within the network for utilization as needed.

There are currently a number of topology discovery mechanisms being proposed or implemented within optical networking equipment. However, none of these solutions are satisfactory. Accordingly, there is a need in the industry to provide an improved mechanism for performing topology discovery in a data network.

EP1087573 describes a dual counter rotating ring network that makes use of both physical rings of SONET lines for data transfer for the purposes of increasing network bandwidth. In order to maintain reliability while using both rings, the network makes use of a simple network topology discovery system to detect failures in a SONET line and re-route data accordingly. As such, the network discovery topology used is concerned with a lower level of a hierarchical topology layer structure and does not feature multi-layer topology discovery. Similarly, WO00/52890 describes a simple SONET network topology discovery mechanism. This mechanisn does not, however, provide information on a layer within a hierarchical topology layer structure.

### SUMMARY OF THE INVENTION

The invention is defined by the subject matter of appended independent claims 1, 16, 17 and 25.

In one broad aspect, the invention provides computer readable storage medium containing a program element for execution by a computing device in a host network element to implement a topology discovery agent, the host network element implementing a hierarchical topology layer structure, the host network element being adapted for communicating over a data link layer with other network elements in a data network, said topology discovery agent implementing a data link layer user, said topology discovery agent operative to generate messages to one or more remote network elements of the data network via the data link layer to convey to the one or more remote network elements network element identity information, said network element identity information conveying information about a plurality of layers of the hierarchical topology layer structure.

The expression "network element identity information" refers broadly to information that allows a remote network entity to derive characteristics about the host network element. Non-limiting examples include:
1. Generalized information about the network element such as distinguished name, OSI/IP addresses, hostnames, location, Automatic Switched Transport Network (ASTN)/Automatic Switched Optical Network (ASON)/Link Management Protocol (LMP), ASTN controller information, Target Identifiers (TID), IEEE system identifiers, Network Service Access Point (NSAP);
2. Network element type information such as optical add/drop multiplexer information, regenerator information, optical amplifier information, optical cross-connect information;
3. Layer specific information applying to the layer(s) being modeled such as layer name, identifier, specific layer attributes;
4. Port specific information applying only to the port over which the network element identity information is being sent such as the port's unique name, Tx topology tag;

One advantage of the topology discovery agent that behaves as a data link layer user resides in its ability to increase discovery coverage within the network. More specifically, this approach allows the messages that contain identity information to be received by an increased number of remote network elements, by comparison to other connection discovery mechanisms.

In a non-limiting example of implementation, the topology discovery agent receives and processes network element identity information messages from one or more remote network elements and processes those messages to derive network topology information. The topology discovery agent communicates with respective remote network entities by establishing logical peer-to-peer connections. The topology discovery agent sends network identity information to each remote network entity with which it has established a peer-to-peer connection, over the peer-to-peer connection and receives network element identity information from that remote network entities over the peer-to-peer connection. The communication over a peer-to-peer connection is done by using a packet based unacknowledged protocol.

Under the same non-limiting example of implementation, the topology discovery agent has a management entity and a topology discovery logic. The topology discovery logic includes a topology discovery engine driving the generation of messages over a peer-to-peer connection. Multiple instances of the topology discovery engine are present when multiple peer-to-peer connections exist, each instance of the topology discovery engine being associated with a respective peer-to-peer connection. Each instance of the topology discovery engine communicates with the data link layer via a data link layer interface. The data link layer interface maps messages or requests from each topology discovery engine instance to primitives of the data link layer.

The topology discovery logic also includes a management controller for controlling and configuring the multiple instances of the topology discovery engine, and a local database for storing network topology information.

The management entity of the topology discovery agent provides retrieval of network topology information from the topology discovery logic, event notification and configuration of the topology discovery logic.

In a second broad aspect, the invention provides a host network element for use in a data network. The host network element has a data link layer for communicating with other network elements in a data network and a topology discovery agent. The topology discovery agent generates messages to one or more remote network elements of the data network as a data link layer user to convey to the one or more remote network elements identity information about the host network element.

In a third broad aspect, the invention provides a computer readable storage medium containing a program element for execution by a computing device in a host network element to implement a topology discovery agent. The host network element has a data link layer for communicating with other network elements in a data network, the data link layer using LAPD protocol. The topology discovery agent generates messages to one or more remote network elements of the data network to convey to the one or more remote network elements network element identity information by using UTIS data packets.

In a fourth broad aspect, the invention provides a computer readable storage medium containing a program element for execution by a computing device in a host network element to implement a topology discovery agent. The host network element has a data link layer using PPP protocol. The topology discovery agent is operative to interact with the data link layer to cause generation of messages to one or more remote network elements of the data network to convey to the one or more remote network elements network element identity information by using LAPD UTIS data packets.

### BRIEF DESCRIPTION OF THE DRAWINGS

A detailed description of examples of implementation of the present invention is provided hereinbelow with reference to the following drawings, in which:
Figure 1 is a block diagram illustrating the architecture of the topology discovery agent in accordance with a non-limiting example of implementation of the invention;
Figure 2 is more detailed block diagram of the topology discovery logic shown in Figure 1;
Figure 3 is a block diagram illustrating an example of a protocol structure that can be used to exchange network element identity information over a peer-to-peer connection;
Figure 4 illustrates an example of a data packet format that can be used in the context of the present invention;
Figure 5 illustrates an example of another data packet format that can be used to carry network element identity information in the context of Link Access Protocol - Channel (LAPD);
Figure 6 illustrates in greater detail some of the fields of the data packet shown at Figure 5

In the drawings, embodiments of the invention are illustrated by way of example. It is to be expressly understood that the description and drawings are only for purposes of illustration and as an aid to understanding, and are not intended to be a definition of the limits of the invention.

### DETAILED DESCRIPTION

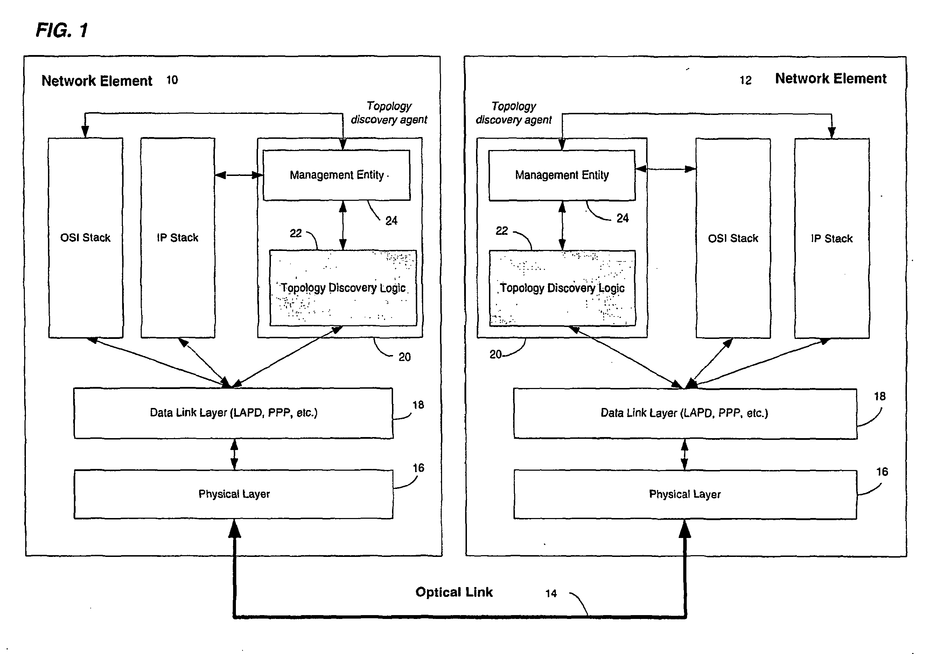

Figure 1 is a block diagram showing two network elements 10, 12 in a data network. The network elements 10, 12 are connected to one another by an optical link 14. It should be understood that other data transport media between individual network elements 10, 12 can be used , such as metallic conductors or wireless connections.

Each network element 10, 12 has a communication structure that includes a physical layer 16 connecting to the optical link. The physical layer 16 that corresponds to the layer 1 in the Optical System Interconnection (OSI) model contains driver interfaces providing higher order layers with access to the physical medium. Above the physical layer 16 is provided a data link layer 18 that corresponds to the layer 2 in the OSI model. The data link layer 2 provides a medium independent interface for sending and receiving data over the physical layer 16, with the physical layer 16 providing control over the specifics of the physical medium. In the specific example of implementation, the data link layer 18 has two logical sublayers (not shown in the drawings):
1. A logical link control sub layer that serves as a transport interface to an upper layer protocol such as a layer 3 protocol in the OSI model. The Internet Protocol (IP) networking layer and the OSI networking layer are examples of layer 3 protocols;
2. A media access control sub layer that is protocol specific to the type of physical media being used.

The Link Access Protocol - Channel D (LAPD) and Point-to-Point Protocol (PPP) are the two primary data link layer protocols utilized over point-to-point optical links, however, LAPD is the most widely deployed link layer solution in the optical network today. LAPD and PPP are the first logical software entities on top of the device drivers providing access to the physical media. Both OSI and IP based networking protocols can run on top of LAPD or PPP, with both link layers designed to multiplex multiple upper layer transport users onto a single physical link. This permits both OSI and IP networking services to be utilized simultaneously and independently on the same physical media.

It should be expressly noted that the present invention is not restricted to any particular type of data link layer protocol.

Each network element 10, 12 includes a topology discovery agent 20 to perform topology discovery within the network. The topology discovery agent 20 behaves as data link layer user and is capable of establishing logical peer-to-peer connections with the topology discovery agents of remote network elements on the existing imbedded data communication channel within each bearer layer of the optical network. Each network element distributes relevant network identity information across all enabled link layer interfaces supporting the topology discovery functionality. In turn, each network element listens for topology discovery information being sent from remote network elements. Exchanged information can be used by the network element 10, 12 itself or passed to higher-order functions.

The topology discovery agent 20 is software implemented. Normally, the topology discovery agent is in the form of a program element residing on any suitable storage medium. The functionality of the topology discovery agent 20 is realized when the program element is executed by the computing platform (not shown) of the network element 10, 12.

The topology discovery agent 20 has two sub-components, namely a topology discovery logic 22 and a management entity 24. The management entity 24 provides a high-level control function. For example, the management entity 24 is responsible for the configuration of the topology discovery logic 22. This includes the configuration of discovery information such as enabled data channels and any configurable parameters, as well as policy for handling hierarchical topology discovery data. In addition, the management entity 24 supports the network element interface for supporting retrieval, event notification, and configuration of topology information and topology protocol engines. The management entity 24 can also provide protocol specific mappings with respect to existing management data models (for example - any existing topology specific message set). It should be noted that the management entity 24 is not necessarily a stand-alone functional component and it may be integrated in the unit of the network element 10, 12 that manages its operations, hence the operational links illustrated in Figure 1 by the arrows connecting the management controller 30 and the OSI stack and the IP stack.

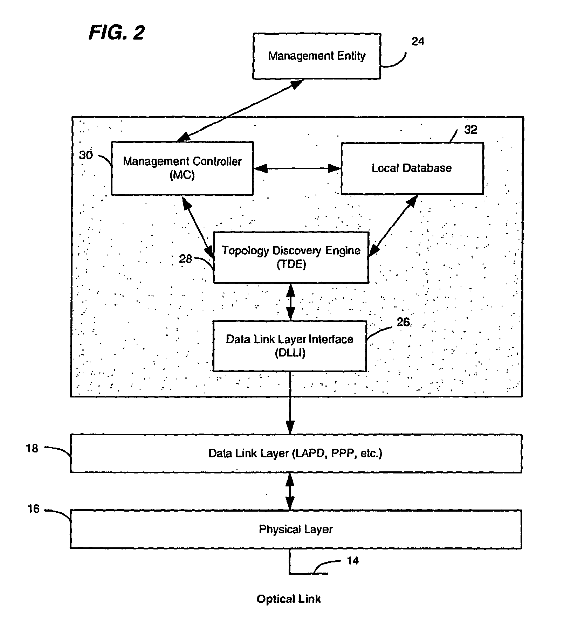

Figure 2 provides a more detailed block diagram of the topology discovery logic 22. The topology discovery logic 22 has four main components, namely a data link layer interface 26, one or more instances of a topology discovery engine 28, a management controller 30 and a local database 32.

The data link layer interface 26 provides for the one or more instances of the topology discovery engine 28 a normalized view of the data link layer 18. Specifically, the data link layer interface 26 maps requests or messages from the one or more instances of the topology discovery engine 28 to primitives of the data link layer 18. The data link layer interface 26 appears to the data link layer 18 as a data link layer user and the data link layer 18 will interface with the data link layer interface 26 in the same way it interfaces with the OSI and IP networking layer. In this specific example of implementation, the data link layer interface 26 is equivalent to a layer 3 entity in the OSI model.

Accordingly, the data link interface 26 can send information via the data link layer 18 by calling upon specific data link layer primitives. Similarly, the data link layer 18 recognizes messages destined to the data link layer interface 26 on the basis of the specific protocol used and when such messages arrive they are directed to the data link layer interface 26.

In some forms of implementation of the invention, the data link layer interface 26 also performs packet segmentation/reassembly based on specific link layer packet sizes and integrity check via Cyclic Redundancy Check (CRC) if the data link layer 18 does not provide sufficient services.

The topology discovery engine 28 is the primary protocol engine for driving the exchange of topology information between two network elements 10, 12 associated via an optical link. The topology discovery engine 28 is responsible for responding to configuration and data change requests from the management controller 30, maintain link status, and sending and receiving network element identity information relating to a specific communications channel. The topology discovery engine 28 can exist in multiple instances, where each instance is associated to a specific peer-to-peer connection. If architecturally desirable, it can also be envisaged to provide a single instance of the topology discovery engine that manages all the peer-to-peer connections.

The topology management controller 30 is responsible for control and configuration of the individual topology discovery engine instances. This includes:
1. Enabling/disabling based on Embedded Control Channel (ECC) availability or specific policy, and reference to appropriate network element identity information in the local database 32.
2. Dictates network element identity information propagation rules for higher-order layer information not terminated by the network element 10, 12.
3. Acts as a consolidation function for multiple topology discovery engines 28 instances, and provide the required management interfaces for integration with the network element management entity 24.

The local database 32 provides local storage and management of network element identity information that is received from remote network elements or that is to be sent out by the host network element to the remote network elements.

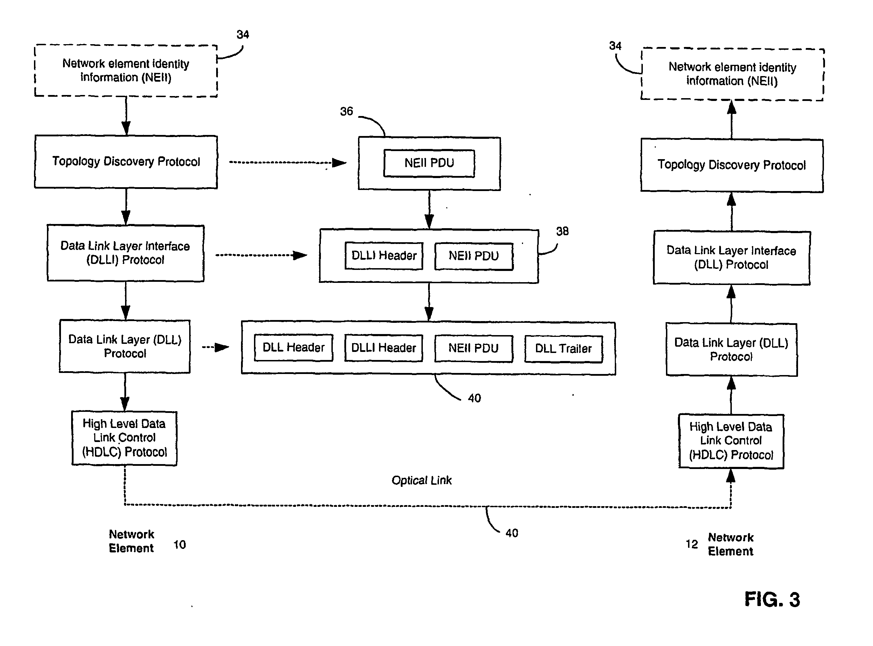

Figure 3 illustrates the protocol structure that can be used to implement the present invention. The protocol is essentially a two-layer protocol including a topology discovery protocol and a data link layer interface protocol. Network element identity information 34 that can be stored in the local database 32 is encoded into Topology Discovery (TD) protocol that is packet based where it may be segmented into one or more Protocol Data Units (PDU) 36. The TD PDU 36 is then passed to the data link layer interface 26 that will perform additional encoding.

In the example shown, the data link layer interface 26 will add a data link layer interface (DLLI) header to the TD PDU to form a data link layer interface packet 38 and forward the packet 38 to the data link layer 18 that will then further encode the information by adding a data link layer (DLL) header and a DLL trailer to form a data link layer packet 40.

The information in the data link layer packet 40 is transmitted over the optical link 14 to the remote network element. The reverse procedure is performed by the remote network element to extract the topology data.

A description of an example of a protocol (TopologyDiscoveryProtocol) is provided below. It is understood that this is provided only for illustrative purposes, without intent to limit the invention to this particular protocol definition. Other protocols can also be used

The *TopologyDiscoveryProtocol* PDU format is structured to permit the exchange of multi-layered network element identity information. The base PDU identifies the adjacent managed element that sent the PDU, and *protocolVersion* defines which version of the *TopologyData* is contained in the *TopologyDiscoveryPDU* structure. The relevant instance of the topology discovery engine 28 would encode and propagate via the data link layer interface 26 a *TopologyDiscoveryPDU* to a remote network element. Each *TopologyDiscoveryPDU* holds network element identity information such as:
1. Generalized information about the network element such as distinguished name, OSI/IP addresses, hostnames, location, Automatic Switched Transport Network (ASTN)/Automatic Switched Optical Network (ASON)/LMP ASTN controller information, Target Identifiers (TID), IEEE system identifiers, Network Service Access Point (NSAP);
2. Network element type information such as optical add/drop multiplexer information, regenerator information, optical amplifier information, optical cross-connect information;
3. Layer specific information applying to the layer(s) being modeled such as layer name, identifier, specific layer attributes;
4. Port specific information applying only to the port over which the PDU is being sent such as the port's unique name, Tx topology tag;
5. Any other parameters deemed necessary.

The TopologyData structure is self nested permitting the modeling of multi-layer network element identity information. The layer field should be set with a unique identifier for the layer in question. The *adjacentManagedElementName* identifies the managed element adjacent at the specified layer. The *layerAttributes* sequence contains all the topology attributes associated with this layer. Finally, the *containedLayers* sequence contains zero or more *TopologyData* structures representing higher order layers contained within the current layer. This concept is quite useful for propagating information relating to higher order layers using a lower level topology discovery channel.

To enhance the usefulness of the concept of contained layers the topology discovery engine follows some simple propagation and termination rules. When receiving a *TopologyDiscoveryPDU* the network element removes only those layers it terminates. Layers not terminated, or not understood by the network element are repopulated into the outgoing *TopologyDiscoveryPDU* at the appropriate layer. This concept can be applied to different types of line systems, where there is a lower layer data communications channel available but an upper layer facility is not present. For example, line terminating equipment may populate a Section/RS layer *TopologyData* structure containing a Line/MS layer *TopologyData* structure and propagate it to its neighbor using the Section Data Communication channel (SDCC). If the next Section/RS terminating equipment was a regenerator, the *TopologyData* structure containing the Section/RS layer information would be removed, but the Line/MS layer *TopologyData* structure would be added in the outgoing Section/RS layer TopologyData structure to be passed on to the next Section/RS terminating equipment. This mechanism becomes extremely useful for the modeling of the OMS (possible multiple instances if band modeling is used) and OCh layers (one instance be wavelength) by Optical Transmission Section (OTS) terminating equipment that support topology discovery propagation via the OSC.

```
 TopologyDiscoveryProtocol DEFINITIONS : :=
 BEGIN
 -- Relies on discovery infrastructure and lower layer
 services to uniquely correlate
 -- protocol PDUs to associated point-to-point discovery
 sessions.
 --
 -- Topology Discovery Protocol Message
 -- Data encoding for an topology discovery PDU.
 --
 --
 -- TopologyDiscoveryPDU element definitions:
 --
 -- protocolVersion
 -- Contains the version identifier corresponding to the
 version of
 -- the TopologyDiscoveryProtocol. protocolVersion
 increases in
 -- numeric value as the protocol version increases.
 Topology
 -- discovery should begin by sending the highest protocol
 version
 -- supported. Reverting to lower versions of the
 protocol occurs on
 -- a per data communications link basis only when a PDU
 is received
 -- from a logical peer with a corresponding lower
 version.
 --
 -- invokeID
 -- Increments over the lifetime of the topology discovery
 session
 -- for the purpose of tracking end-to-end PDU
 transmission. This
 -- attribute is not vital to the operation of the
 protocol given it
 -- is unacknowledged. The value should be maintained per
 data
 -- communications link to permit tracking dropped PDUs,
 and can be used
 -- in conjunction with adjacentManagedElementName and
 adjacentManagedLinkName
-- to uniquely identify a discovery message instance.
 --
 -- adjacentManagedElementName
 -- A URL, TID, or equivalent unique name identifying the
 logically adjacent
 -- sender of topology data. This attribute definition
 must not
 -- change witch version changes of the
 TopologyDiscoveryProtocol.
 -- This attribute should be parsed even when further
 parsing of the
 -- PDU cannot take place. This will permit basic
 identity discovery
 -- to take place even when protocol version are
 incompatible between
 -- two adjacent entities.
 --
 -- adjacentManagedLinkName
 -- A name uniquely identifying the link/port over which
 the topology discovery
 -- PDU was sent and provides a mechanism for referencing
 the source of the
 -- topology information for any further interactions.
 This link name may be
 -- considered independent of the layer topology discovery
 information described
 -- in the topologyData structure, which itself can
 contain a unique name
 -- describing the link/port for the specific layer being
 modeled.
 --
 -- topologyData
 -- Contains the detailed topology discovery data.
 --
 TopologyDiscoveryPDU ::= SEQUENCE {
     protocolVersion VERSION,
     invokeID InvokeIdType,
     adjacentManagedElementName NameType,
     adjacentManagedLinkName NameType,
     topologyData ANY DEFINED BY protocolVersion
 }
 --
 -- InvokeIdType
 -- InvokeIdType is an integer type used for incrementally
 enumerating topology
 -- discovery PDUs.
 --
 InvokeIdType ::= INTEGER
 --
 -- NameType
 -- NameType is used for attributes representing the
 unique distinguished
 -- name of an entity. The caseIgnoreString syntax should
 be used for matching
 -- rules on this type of attribute to provide maximum
 interoperability.
 --
 NameType ::= PrintableString
 --
 -- Version 1.0 of the protocol specification. The
 protocolVersion field
 -- must be used to determine which parsers should be
 invoked on the
 -- topologyData structure. Version changes should not be
 required given
 -- the flexibility of the PDU definition. Parsing unknown
 versions of
 -- the PDU can be done with understood risk.
 TopologyDiscoveryPDU-V1 VERSION ::= 1
 --
 -- TopologyDataV1 element definitions:
 --
 -- layer
 -- Identifies the layer to which the layerAttributes
 correspond. Each layer can be
 -- assigned a unique character string to identify the
 layer (i.e. "OTS", "OMS",
 -- "OCh", "ODU", OTU", "RS", "MS", etc.).
 --
 -- adjacentManagedElementName
 -- The distinguished name of the adjacent network
 element. When populating a PDU
 -- the sourcing network element will populate its
 distinguished name for the layer
 -- in question. When receiving a PDU this will contain
 the distinguished name of
 -- the adjacent network element for the identified layer.
 If there are additional
 -- names or identifiers (such as IP addresses) for the
 network element they can be
 -- propagated using an attribute populated in the
 layerAttributes parameter.
 --
 -- layerAttributes
 -- An optional sequence of TopologyAttribute which can
 hold a set of attribute
 -- type/values pairs corresponding to the layer
 identified by layer.
 --
 -- containedLayers
 -- An optional sequence of TopologyDataV1 used to model
 higher order layer
 -- information associated with or carried within the
 current layer. An
 -- TopologyDataVl structure could potentially exist for
 each higher order layer
 -- associated with the current layer. The
 containedLayers element is recursive
 -- permitting multiple higher order layers to be modeled
 within the current layer.
 --
 TopologyDataV1 ::= SEQUENCE {
     layer LayerIdentifierType,
     adjacentManagedElementName NameType,
     layerAttributes [1] SEQUENCE OF TopologyAttribute
     OPTIONAL,
     containedLayers [2] SEQUENCE OF TopologyDataVl
 OPTIONAL
 }
 --
 -- LayerIdentifierType
 -- Each layer can be assigned a unique character string
 which can be represented
 -- by this type. The caseIgnoreString syntax should be
 used for matching rules
 -- on this type of attribute to provide maximum
 interoperability.
 --
 LayerIdentifierType ::= PrintableString
 --
 -- TopologyAttribute
 -- PrintableString based definition of the standard X.208
 ANS.1 version. Will
 -- permit more flexible attribute definitions and reduces
 forward/backward
 -- compatibility issues. The caseIgnoreString syntax
 should be used for matching
 -- rules on both the type and values for maximum
 compatibility.
 --
 TopologyAttribute : := SEQUENCE {
    type TopologyAttributeType,
    values SET OF TopologyAttributeValue
    }
    TopologyAttributeType ::= PrintableString
    TopologyAttributeValue ::= PrintableString
 END
```

As indicated previously, the data link layer interface 26 initializes the underlying data link layer 18 with parameters that are independent of the topology discovery engine 28. This can be achieved by using data link layer primitives to gain access to the data link layer functionality. The following table is an example of a set of abstract service primitives that can be used by the data link layer interface 26 for use by the topology discovery engine 28. These service primitives map one-to-one onto existing LAPD or PPP link layer user primitives where use of the link layer is required. For clarity, the table also shows the corresponding OSI-based data link layer primitives (DLL). All of these primitive will be satisfied locally if unidirectional communications are being utilized. A subset could involve interactions with the remote network element if the Data Link Layer Interface (DLLI) 26 is implemented over a link layer supporting bi-directional communications only.

| **Service Primitives** | **Operation** | **Notes** |
|---|---|---|
| DLLI-CONNECT (DL-CONNECT) | request | Topology discovery engine connect request to establish peer-to-peer connection with a remote network element. In the unidirectional scenario this would be implemented as a local operation to initialize a topology discovery specific link layer session. For bi-directional link layers this would require negotiation with the remote network element for the establishment of a topology discovery specific data link layer session. |
| | indication | Topology discovery engine indication of a request to establish peer-to-peer connection. In the unidirectional scenario this would occur upon receipt of a topology discovery PDU over the defined topology data link layer Service Access Point (SAP) if and only if the topology discovery engine has not already requested a data link layer session. For bi-directional data link layers this would be an indication that the remote network element is requesting the establishment of a peer-to-peer connection. |
| | response | Topology discovery engine response to a peer-to-peer connection request. |
| | confirm | Topology discovery engine confirmation to original connection request. |
| DLLI-DISCONNECT (DL-DISCONNECT) | request | Topology discovery engine request to disconnect topology discovery data link layer services. All outstanding user data may be lost. |
| | indication | Topology discovery engine indication of a remote network element requested, or locally generated disconnect of topology discovery data link layer services. All outstanding user data may be lost. Remote network element request only applicable if a bi-directional data link layer session is being utilized. |
| DLLI-DATA (DL-DATA) | request | Topology discovery engine request to send network element identity information data to remote network element. This service is unacknowledged and does not have an associated confirm. Error reports can be supported if problem is locally detected. (Maps to a DL-UNIT DATA request in LAPD) |
| | indication | Topology discovery engine indication containing network element identity information data transmitted from remote network element. (Maps to a *DLL-UNIT* DATA indication in LAPD) |
| DLLI-RESET (Local) | request | Topology discovery engine request for reset of local DLLI state machine to a well-known connected state clearing any associated unacknowledged network element identity information data buffers. |
| | confirm | Confirmation of topology discovery engine request for DLLI reset. |
| DLLI-FLOW-CONTROL (Local) | indication | Locally generated indication that informs topology discovery engine of flow control status with respect to DLLI user data buffers. |
| DLLI-ERROR-REPORT (Local) | indication | Locally generated report outlining any error conditions. |

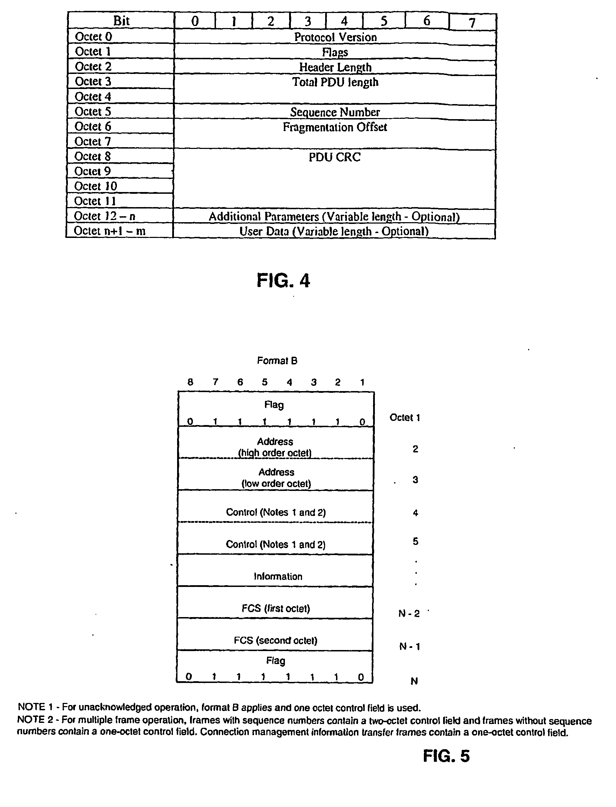

An example of a DLLI PDU is shown in Figure 4. It is to be noted that this is only an example as variations are possible .

If the data link layer interface 26 determines that the encoded network element identity information exceeds the maximum configured data link layer packet size or the maximum DLLI PDU size, the data link layer interface 26 will fragment the network element identity information into multiple PDUs to permit transfer to the peer. The data link layer interface 26 on the receiving entity must reassemble the entire original PDU. Fragmentation and reassembly is handled using the Fragmentation Offset field similar to the IP v4 namesake except a simplified algorithm can be used since segmentation only occurs once in the point-to-point model.

If the data link layer interface 26 determines that the PDU cannot be reassembled in its entirety, or contains CRC errors, then the PDU is discarded.

### Protocol Version (8 bits - 1 octet)

Version of the DLLI protocol (value of 1).

### Flags (8 bits - 1 octet)

Bits 0 - 3 : PDU type (only support value of 0 for data PDU).

Bit 4: More Fragments (MF) 0 = Last Fragment, 1 = More Fragments.

Bits 5 - 7: Undefined.

### Header Length (8 bits - 1 octet)

The total length in octets of the PDU header including any optional parameters.

### Total length (Header + User Data) (16 bits - 2 octets)

The total length in octets of the PDU header + user data.

### Sequence Number (8 bits - 1 octet)

Sequentially incrementing number used to determine if any PDU were lost and to identify PDUs containing fragmented user data.

### Fragmentation Offset (16 bits - 2 octets)

The More Fragments flag bit (MF) is set in the Flag field if the PDU is not the last fragment. The Sequence Number field is set to the same value for all PDU segments. The Fragment Offset field identifies the fragment location, relative to the beginning of the original unfragmented PDU. Fragments are counted in units of 8 octets. The fragmentation strategy is designed so than an unfragmented PDU has all zero fragmentation information (MF = 0, Fragment Offset = 0). The last PDU should contain MF = 0 with a non-zero Fragment Offset value.

If a PDU is fragmented, its data portion can be broken on any 8-octet boundary. This format allows for a total of 2**16 = 65536 8 octets chunks. This can be considered extreme for topology discovery, however, the bits are available so there is no reason to compact them. If a target link layer is determined that cannot accept the minimum fragmented PDU length (12 Octets + some 8 octet multiplier) then redesign of the DLLI PDU can be performed to reduce the size.

### CRC (32 bits - 4 octets)

Cyclic Redundancy Check verifies whether the PDU contain errors. The CRC is computed on header (excluding the CRC field) and user data. Not truly needed for SONET links with Forward Error Correction (FEC) on the payload with covers all ECC, but Optical Supervisory Channel (OSC) links do not benefit from FEC.

### Additional Header parameters (variable)

No additional header parameters are defined. Presence of parameters and their length is determined by using the Header Length field and the minimum header length (12 octets).

### User Data (variable)

Contains the network element identity information encoded data.

The topology discovery network element identity information exchange procedure between network elements 10, 12 will now be described. This procedure is followed by topology discovery logic 22 for each bearer layer of the optical network where an imbedded data communication channel exists, is enabled, and supports the topology discovery procedure. The topology discovery mechanism can be selectively disabled on a per channel basis as required for security or interoperability concerns.

It is assumed that the data link layer technology type supports a topology discovery specific Service Access Point (SAP) to permit the creation of a logical peer-to-peer data communications channel. These identifiers are fixed and known throughout the network so no manual configuration should normally be required. If a network element does not support topology discovery, or has disabled the functionality, the management controller 30 will not register the service access point with the corresponding data link layer 18. The data link layer will then discard any received data for the specific topology service access point without impacting other protocols running over that link.

Network element identity information will be periodically sent across an optical link 14 based one of three triggers: the per link update timer AD-1, topology data changed events, or a data link layer state change. Failures to send data detected locally will result in a hold-off procedure being initiated allowing a resend when local error conditions have been cleared. Failures not detected locally, such as data lost between peers as a result of underlying infrastructure errors, whether detected on the remote end or not, will be recovered when the periodic update timer expires. Each time a change in adjacency information occurs, or the send timer AD-1 expires, all adjacency information for that communications link will be resent.
The general process performed by the topology discovery logic will be described as follows:
1) The topology discovery logic 22 in a host network element will try establishing a logical peer-to-peer connection with remote network elements for each logical layer enabled for topology discovery. The topology discovery logic 22 will enable a data link layer user on the designated topology discovery service access point and perform a unidirectional send (on a point-to-point optical link) or multicast/broadcast (on a LAN link) of network element identity information to remote network elements targeting the topology discovery service access point. Here the topology discovery logic 22 is in effect blindly sending network element identity information to other network entities in the network that support topology discovery;
1) If one or more of the remote network elements support topology discovery on one or more of their layers, they will receive the data packets sent from the host network element and respond with sending relevant network element information back to the host network element. When two network elements have noted their respective existence by the exchange of network element identity information, a logical peer-to-peer connection is created between the management entities 24 on the respective network elements 10, 12. It should be noted that each peer-to-peer connection is related to a given layer, therefore, if a pair of network elements support topology discovery over multiple layers, they will be establishing multiple peer-to-peer connections between them. The protocol that is used to send information over each peer-to-peer connection is unacknowledged. In a possible variant, the protocol could be acknowledged, however it is generally found more advantageous to use unacknowledged protocol for transmitting network element identity information over unidirectional ECC links;
2) For each established peer-to-peer connection the topology logic 22 initializes a topology discovery send timer AD-1;
3) On expiry of send timer AD-1:
   a) Send network element identity information over the peer-to-peer connection;
   b) Reset topology discovery send timer AD-1 to next interval.
5) On notification of received data at designated service access point from the remote network entity over the peer-to-peer connection:
   a) Read network element identity information from designated service access point;
   b) Update local database 32 with received network element identity information;
   c) Propagate received network element identity information to associated management entity 24. The network element identity information received over different peer-to-peer connections enables the host network element to derive network topology information. The processing of the network element identity information necessary derive the network topology information can be done at different locations . In one specific example, the processing of the network element identity information received from several network elements is done by the topology discovery logic and the resulting network topology information is stored in the local database 32. Alternatively, the local database 32 only holds the network element identity information and an external entity is free to access this information and perform the necessary processing to derive the network topology information. Such external entity could be the management entity 24.
6) On notification from management entity 24 of changed network element identity information:
   a) Send updated network element identity information over the peer-to-peer connection through designated service access point;
   b) Reset timer AD-1 to next interval
7) On notification of data communication channel down:
   a) Update local database 32 to indicate link state as down and network element identity information as possibly out-of-date;
   b) Remove topology discovery service access point for specific peer-to-peer connection;
   c) Disable topology discovery procedure for specific peer-to-peer connection including associated AD-1 timer.

The above described topology discovery data exchange procedures and protocols allow to implement the concept of hierarchical layering, permitting a lower layer topology discovery mechanism to pass information pertaining to higher layers. The topology discovery protocol itself does not interpret this additional layer data. It is the responsibility of the management entity 24 to configure correct action for the management controller 30 with respect to handling of this type of data. For example, Optical Transmission Section (OTS) layer topology discovery performed over OSC segments may carry Optical Multiplex Section (OMS) layer information, as there is not a specific OMS layer imbedded data communication channel. In this example, the management entity 24 on each OTS terminating network element 10, 12 within the line system should propagate the OMS layer information across the next OTS segment if the network element 10, 12 does not terminate the OMS layer. Also included with the propagated OMS data is the OTS network element's 10, 12 own topology discovery information for that segment. Propagation decisions are easily determined given each OTS terminating network element 10, 12 would have a one-to-one port mapping with respect to OMS layer connectivity. The management entity 24 on a network element 10, 12 is free to utilize the OMS layer related topology discovery information as needed if the network element 10, 12 does, in fact, terminate the OMS layer.

In one specific practical implementation of the invention, the layers that can be propagated by the topology discovery logic 22 are dependent on the layer at which the topology discovery mechanism is implemented. The typical layers present within an optical network are the following ones:
1. SONET Line (SDH MS);
2. SONET Section (SDH RS);
3. Optical Chanel Data Unit (ODU);
4. Optical Transmission Section (OTU);
5. Optical Channel Layer (Och);
6. Optical Multiplexer Section (OMS);
7. (Optical Transmission Section (OTS)

Implementing the topology discovery protocol at a lower layer (OTS being the lowest and SONET Line (SDH MS) being the highest) allows the propagation of information on higher layers.

For example:
1. Implementing the topology discovery protocol at the SONET Section layer allows propagating SONET Line information;
2. Implementing the topology discovery protocol at the OTU layer allows propagating ODU information;
3. Implementing the topology discovery protocol at the OTS layer allows propagating OMS information which in turns carries Och information;

As indicated earlier, one of the most common data link layer protocols used over optical links are LAPD and PPP. The following section will describe in greater detail the implementation of the invention in the context of an LAPD protocol and in the context of a PPP protocol.

### LAPD Profile

Both SONET and SDH standards outline LAPD on the SDCC and Line Data Communication Channel (LDCC) for link layer support [GR-253-CORE, G.784 and G.7712]. Support for both the Acknowledge Information Transfer Service (AITS) and the Unacknowledged Information Transfer Service (UITS) is required by those specifications. In addition, support for manual configuration of all link layer related parameters is also required by G.784 so that auto negotiation of link layer parameters at stack initialization time is not required by network elements. It should also be noted that AITS and UITS data transfer modes can be supported simultaneously as per Q.921. These LAPD profiles have been extended to ECC for other layers within the Optical Transport Network as de facto standards.

The AITS mode of data transfer is only supported in the case of bi-directional ECC data communication links as it requires packet acknowledgement. UITS can also be used for bi-directional data communication links, however, it is an unacknowledged link layer protocol so it can be used as-is across unidirectional links when the link layer user does not require two way communications.

The topology discovery protocol is unacknowledged so it could theoretically use LAPD in either AITS or UITS modes for maximum deployment flexibility; however, to meet the objective of discovery over unidirectional links UITS are used. More specifically, the LAPD UITS unnumbered information (UI) command issued through the DL-UNIT DATA link layer primitive can be used for topology discovery over peer-to-peer connections. This specific message can send information to its peer without affecting data link layer variables. UI command packets do not carry a sequence number and therefore, the UI packet may be lost without notification. In addition, on the receiving end these UI packets will be discarded gracefully if the remote network layer entity identified by the Service Access Point Identifier (SAPI), and a Terminal Endpoint Identifier (TEI) pair is not available. The receiver discards invalid UI packets without notification to the sender. No action is taken as the result of that packet.

The following section uses text from Q.921 to describe the LAPD UITS packet format and packet contents utilized to carry network element identity information. All UITS data-link layer peer-to-peer exchanges utilize packet format shown at Figure 5.

*Flag sequence -* All packets shall start and end with the flag sequence cohsisting of one 0 bit followed by six contiguous 1 bits and one 0 bit. The flag preceding the address field is defined as the opening flag. The flag following the Frame Check Sequence (FCS) field is defined as the closing flag. The closing flag may also serve as the opening flag of the next packet, in some applications. However, all receivers must be able to accommodate receipt of one or more consecutive flags.

*Address field* - The address field for UITS uses two octets. The address field format shown below contains the address field extension bits, a command/response indication bit, a data-link layer Service Access Point Identifier (SAPI) subfield, and a Terminal Endpoint Identifier (TEI) subfield. Unique default values for the TEI/SAP pair will need to be assigned to the topology discovery protocol.

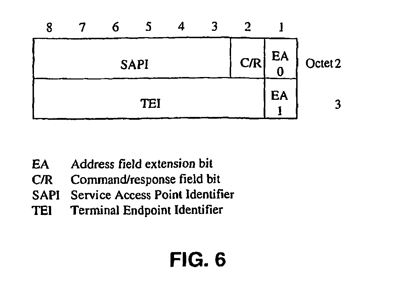

*Address field extension bit (EA)* - As shown in Figure 6, the address field range is extended by reserving the first transmitted bit of the address field octets to indicate the final octet of the address field. The presence of a 1 in the first bit of an address field octet signals that it is the final octet of the address field. The double octet address field for LAPD operation shall have bit 1 of the first octet set to a 0 and bit 1 of the second octet set to 1, otherwise the packet shall be ignored.

*Command*/*response field* bit (C/R) - The C/R bit identifies a packet as either a command or a response. Topology discovery will needs to send commands. The value of the C/R bit is based on whether the user-side or network-side is issuing the command. The concept of user and network on a unidirectional point-to-point topology discovery ECC link where network elements are considered peers is somewhat meaningless given no link layer negotiation takes place and only UITS unnumbered information packets are being used. To eliminate the need to manually configure the user/network role for the topology discovery engine TEI/SAPI, all topology discovery engines should register as the user role1. Topology discovery PDUs will result in UI packets being sent as commands with the C/R bit set to 0. Received topology discovery PDUs will therefore present them as a response.

In conformance with HDLC (High-level Data Link Control procedures) rules, both peer entities on a point-to-point data link connection use the same Data Link Connection Identifier (DLCI) composed of a SAPI-TEI where SAPI and TEI conform to the definitions contained in this section and define the data link connection as described in section 3.4.1 of Q.920.

*Service Access Point Identifier (SAPI)-* The SAPI identifies a point at which data-link layer services are provided by the data-link layer 18 to a layer 3 entity or management entity. Consequently, the SAPI specifies a data-link layer entity type that should process a data-link layer packet and also a layer 3 or management entity which is to receive information carried by the data-link layer packet. A SAPI should be assigned for topology discovery.

*Terminal Endpoint Identifier (TEI) -* It is possible to associate a TEI with a single Terminal Equipment (TE) for a point-to-point data-link connection. A TE may contain one or more TEIs used for point-to-point data transfer. TEI values other than 127 are used for the point-to-point data-link connections associated with the addressed SAP. A TEI will need to be assigned for topology discovery which follows the non-automatic TEI assignment procedures.

*Control field formats -* A UITS packet uses a single octet control field set as unnumbered information transfer (U format) command. The control field does not contain sequence numbers. The control field format and contents for UITS is shown below.

| **Control field bits (modulo 128)** | **8** | **7** | **6** | **5** | **4** | **3** | **2** | **1** | |
|---|---|---|---|---|---|---|---|---|---|
| U format | M | M | M | P/ | M | M | | | Octet |
| Values for UITS | 0 | 0 | 0 | F | 0 | 0 | 1 | 1 | 4 |
| | | | | 0 | | | | | |
| | M Modifier function bit P/F Poll bit when issued as a command, final bit when issued as a response | | | | | | | | |

*Information field -* The information field of the UITS packet contains the network element identity information which, in this example has an integer number of octets. The maximum number of octets in an information field is a per-link configurable system parameter (N201) with defaults provided in G.784.

*Frame Check Sequence (FCS) field -* The FCS field is a 16-bit sequence. It should be the ones complement of the sum (modulo 2) of:
a) the remainder of
   x^{k}
   (x15 + x14 + x13 + x12 + x11 + x10 + x9 + x8 + x7 + x6 + x5 + x4 + x3 + x2 + x + 1) divided (modulo 2) by the generator polynomial x16 + x12 + x5 + 1, where k is the number of bits in the packet existing between, but not including, the final bit of the opening flag and the first bit of the FCS, excluding bits inserted for transparency; and
b) the remainder of the division (modulo 2) by the generator polynomial x16 + x12 + x5 + 1, of the product of x16 by the content of the packet existing between, but not including, the final bit of the opening flag and the first bit of the FCS, excluding bits inserted for transparency.

As a typical implementation at the transmitter, the initial content of the register of the device computing the remainder of the division is preset to all 1 and is then modified by division by the generator polynomial (as described above) on the address, control and information fields; the ones complement of the resulting remainder is transmitted as the 16-bit FCS.

As a typical implementation at the receiver, the initial content of the register of the device computing the remainder is preset to all 1s. The final remainder, after multiplication by x16 and then division (modulo 2) by the generator polynomial x16 + x12 + x5 + 1 of the serial incoming protected bits and the FCS, will be 0001110100001111 (x15 through x0, respectively) in the absence of transmission errors.

*LAPD* State *machine -* One aspect of the topology discovery protocol is that it can be utilized over unidirectional links where other data communications protocols cannot function. Utilization of UITS DL-UNIT DATA primitive to send network element identity information permits this type of one-way communications once initial parameters have been provisioned (or assigned by default). These provisioned parameters would include:
- Access point identifier (SAPI) Value.
- Terminal end-point identifier (TEI) Value.
- Packet size (N201) - which shall be capable of supporting a minimum information field of 512 octets.
- The assignment of user-side/network-side roles (and hence the C/R bit value).

### LAPD Profile - hybrid solution

Since the PPP protocol is an acknowledged protocol, the implementation of a topology discovery using an unacknowledged protocol under PPP would normally require a modification to the PPP protocol. In one form of implementation, the present invention addresses the issues of incompatible link layers on adjacent network elements and the modification to the PPP protocol for unacknowledged topology discovery. Given that the deployment of IP/PPP-only based network elements has been somewhat limited to recent years, and that the large majority of optical networking equipment deployed in the field supports OSI/LAPD, a possible implementation of the invention is possible that requires no change to existing LAPD link layers, no change to existing PPP implementations, and only minor changes to the infrastructure on IP/PPP-only based network elements. This hybrid solution is based on the LAPD UITS DL-UNIT DATA unnumbered information packet that is used over all links for topology discovery.

LAPD packets can be distinguished from PPP packets when extracted from HDLC permitting both PPP and LAPD to run simultaneously over the embedded data communication links. PPP-only based network elements would only need to distinguish the LAPD packet conveying network element identity information and pass it through a trivial LAPD link layer to the topology discovery agent. A PPP-only network element implementing a trivial LAPD link layer to support discovery would only need to extract the information field from the LAPD type B unnumbered information packet on receiving and pass this discovery data to the receiving end. Similarly, on sending the trivial LAPD link layer would wrap the local network element's discovery data in the LAPD type B unnumbered information packet with the specific TEI/SAPI for discovery and pass it to HDLC for sending over the ECC. This hybrid solution does not require the LAPD state machine, given that the unnumbered information packet mechanism being utilized already simply passes through the existing LAPD state machine without forcing a state transition. Using this mechanism existing PPP and LAPD protocol engines remain unchanged, with only a small modification to the interface between HDLC and PPP on the PPP-only network element.

When utilizing HDLC over the ECC it is possible to distinguish between LAPD and PPP link layer packets using the second octet of the packet. As shown in the following table, in a PPP packet the second octet is a fixed value of 0xff.

| Octe t 1 | 2 | 3 | 4 - 5 | 6 - ... | N - 2 | N - 1 | N |
|---|---|---|---|---|---|---|---|
| **Flag** | **Addr** | **Ctrl** | **Protocol** | **PPP packet** | **FCS** | **FCS** | **Flag** |
| 0x7e | 0xff | 0x03 | **LCP** | **Data** | | | 0x7e |
| | | | 0xc021 | LCP Packet | | | |

As shown in Figure 6, the second octet in LAPD has three components:
- A six bit SAPI value - The SAPI value can be one of a number of values as specified in Q.921; however, the topology discovery protocol will likely have a dedicated value.
- A one bit C/R value - The C/R bit is set to either 1 or 0 based on whether the packet is a command or response and whether the sending was configured in the network or user role. In most cases this bit will be set to 0 to simplify LAPD configuration.
- A one bit EA value - The EA bit in the second octet is always set to 0 which means that second octet in the LAPD packet can never contain a value of 0xff.

In the general case of distinguishing between LAPD and PPP packets transferred over HDLC, the second octet of the packet would be a clearly distinguishing value in the entire packet.

If a PPP-only network element was being extended to support only the adjacency discovery functionality the following simple logic can be inserted between HDLC and the link layer:

```
 FOR (each packet received via HDLC)
 {
     IF (octet #2 equals 0xFF)
      {
          /* Packet is a PPP packet. */
          send packet to PPP link layer machine;
      }
 ELSE
  {
          /* Packet is a LAPD packet. */
          IF (SAPI value in octet #2 equals adjacency discovery SAPI) and
           (TEI value in octet #3 equals adjacency discovery TEI)
          {
          /* Packet is adjacency discovery packet. */
          Send packet to trivial LAPD adjacency discovery machine;
           }
          ELSE
           {
          Discard packet;
        }
      }
      } /* end FOR */
```

Although various embodiments have been illustrated, this was for the purpose of describing, but not limiting, the invention. Various modifications will become apparent to those skilled in the art. For instance, for optical network elements that also support data interfaces such as the IEEE 802.3 Ethernet LAN, identical functionality can be achieved using the IEEE 802.2 link layer. Unidirectional communications targeting network elements supporting topology discovery is achievable via mutticast/broadcast functionality supported by the IEEE 802.3 Ethernet LAN profile. The IEEE 802.2 link layer supports unnumbered information (UI) frames and the concept of Service Access Points (SAP) similar to LAPD.

### Other Embodiments of the Present Invention:

Other embodiments of the present invention include the following:

A Computer readable storage medium containing a program element for execution by a computing device in a host network element to implement a topology discovery means, the host network element having a data link layer for communicating with other network elements in a data network, said topology discovery means implementing a data link layer user means, said topology discovery means operative to generate messages to one or more remote network elements of the data network via the data link layer means to convey to the one or more remote network element identify information.

A host network element for use in a data network, said host network element comprising: a) data link layer means for communicating with other network elements in a data network; b) a topology discovery means, said topology discovery means implementing a data link layer user means, said topology discovery means operative to generate messages to one or more remote network elements of the data network via said data link layer means to convey to the one or more remote network elements network element identity information.

A computer readable storage medium containing a program element for execution by a computing device in a host network element to implement a topology discovery agent, the host network element having a data link layer using LAPD protocol, said topology discovery agent operative to interact with the data link layer to cause generation of messages to one or more remote network elements of the data network to convey to the one or more remote network elements network element identity information by using UTIS data packets.

## Claims

1. A computer readable storage medium containing a program element for execution by a computing device in a host network element (10, 12) to implement a topology discovery agent (20), the host network element (10, 12) implementing a hierarchical topology layer structure, the host network element (10, 12) being adapted for communicating over a data link layer (18) with other network elements in a data network, said topology discovery agent (20) implementing a data link layer user, said topology discovery agent (20) operative to generate messages to one or more remote network elements of the data network via the data link layer (18) to convey to the one or more remote network elements network element identity information, said network element identity information conveying information about a plurality of layers (16, 18) of the hierarchical topology layer structure.

2. A computer readable storage medium as claimed in claim 1, wherein said topology discovery agent (20) is operative to receive and process messages from one or more remote network elements from which network topology information can be derived.

3. A computer readable storage medium as claimed in claim 1 or claim 2, wherein said topology discovery agent (20) is capable of establishing a logical peer-to-peer connection with a peer topology discovery agent in a remote network element.

4. A computer readable storage medium as claimed in any one of claims 1 to 3, wherein the messages conveying network element identity information are sent from the host network element (10, 12) via the data link layer (18) by using an unacknowledged protocol.

5. A computer readable storage medium as claimed in any one of claims 1 to 4, wherein the messages conveying network element identity information are sent from the host network element (10, 12) over an optical link (14).

6. A computer readable storage medium as claimed in claim 5, wherein the data link layer (18) uses LAPD link layer protocol, the messages conveying network element identity information are sent from the host network element (10, 12) by using UTIS data packets.

7. A computer readable storage medium as claimed in claim 6, wherein the UTIS data packets are sent over an Embedded Control Channel 'ECC'.

8. A computer readable storage medium as claimed in claim 7, wherein the topology discovery agent (20) invokes a DL-UNIT DATA link layer primitive to cause generation of the UTIS data packets.

9. A computer readable storage medium as claimed in claim 5, wherein the data link layer (18) uses Point to Point 'PPP' link layer protocol and the messages conveying network element identity information are sent from the host network element (10, 12) by using LAPD UTIS data packets.

10. A computer readable storage medium as claimed in any one of claims 1 to 9, wherein said topology discovery agent (20) implements a management entity (24) and a topology discovery logic (22) in communication with said management entity (24), said management entity (24) being implemented to perform a control function over said topology discovery logic (22).

11. A computer readable storage medium as claimed in claim 10, wherein said topology discovery logic implements a topology discovery engine (28) for controlling the generation of messages conveying network element identity information.

12. A computer readable storage medium as claimed in claim 10 or claim 11, wherein the data link layer (18) uses predetermined primitives, said topology discovery logic implements a data link layer interface (26), said data link layer interface (26) operative to map requests or messages from said topology discovery engine (28) to primitives of the data link layer (18).

13. A computer readable storage medium as claimed in claim 12, wherein said topology discovery logic (22) implements a management controller (30) for controlling and configuring said topology discovery engine (28).

14. A computer readable storage medium as claimed in claim 13, wherein said topology discovery logic (22) implements a local database (32) for storing network topology information.

15. A computer readable storage medium as claimed in claim 10, wherein said topology discovery logic (22) implements a timer generating periodically timer events, said topology discovery logic (22) generating messages conveying network element identity information in response to a timer event.

16. A method for performing topology discovery in a host network element (10, 12) having a topology discovery agent (20), the host network element (10, 12) being adapted to implement a hierarchical topology layer structure, the host network element having a data link layer (18) and being adapted for communicating over said data link layer (18) with other network elements in a data network, said method comprising said topology discovery agent (20) :
implementing a data link layer user in the host network element (10, 12); and
causing said data link layer user to interact with the data link layer (18) for causing the data link layer (18) to send messages to one or more remote network elements of the data network via the data link layer (18) to convey to the one or more remote network elements network element identity information, said network element identity information conveying information about a plurality of layers (16, 18) of the hierarchical topology layer structure.

17. A host network element (10, 12) for use in a data network, said host network element (10, 12) being adapted to implement a hierarchical topology layer structure, the host network element (10, 12) being adapted for communicating with other network elements in a data network, the hote network element (10, 12) further comprising a topology discovery agent (20), said topology discovery agent (20) being adapted to implement a data link layer user, said topology discovery agent (20) being adapted to generate messages to one or more remote network elements of the data network via a data link layer (18) to convey to the one or more remote network elements network element identity information, said element identity information being arranged to convey information about a plurality of layers of the hierarchical topology layer structure.

18. A host network element (10, 12) as claimed in claim 17, wherein said topology discovery agent (20) is adapted to receive and process messages from one or more remote network elements from which network topology information can be derived.

19. A host network element (10, 12) as claimed in claim 17 or claim 18, wherein said topology discovery agent (20) is adapted to establish a logical peer-to-peer connection with a peer topology discovery agent in a remote network element.

20. A host network element (10, 12) as claimed in any one of claims 17 to 19, wherein host network element (10, 12) is adapted to send the messages conveying network element identity information from the host network element (10, 12) via the data link layer (18) by using an unacknowledged protocol.

21. A host network element (10, 12) as claimed in any one of claims 17 to 20, wherein the host network element (10, 12) is adapted to send the messages conveying network element identity information from the host network element (10, 12) over an optical link 14).

22. A host network element (10, 12) as claimed in claim 21, wherein the data link layer (18) is adapted to use LAPD link layer protocol and the host network element (10, 12) is adapted to send the messages conveying network element identity information using UTIS data packets.

23. A host network element (10, 12) as claimed in claim 22, wherein the host network element (10, 12) is adapted to send the UTIS data packets over an embedded Control Channel 'ECC'.

24. A host network element (10, 12) as claimed in claim 23, wherein the topology discovery agent (20) is adapted to invoke a DL-UNIT DATA link layer primitive to cause generation of the UTIS data packets.

25. A data network comprising a plurality of host network elements (10, 12) in accordance with any one of claims 17 to 24, each said host network element (10, 12) being adapted to communicate with other network elements in the data network.

## Patentansprüche

1. Ein rechnerlesbares Datenspeichermedium mit einem Programmelement zum Ausführen durch einen Rechner in einem Host-Netzwerkelement (10, 12) zur Implementierung eines Topologie-Entdeckungsmittels (20), wobei das Host-Netzwerkelement (10, 12) eine hierarchische Topologie-Schichtstruktur implementiert und das Host-Netzwerkelement (10, 12) so konfiguriert ist, dass es über eine Datenlinkschicht (18) mit anderen Netzwerkelementen in einem Datennetzwerk kommunizieren kann, und wobei das besagte Topologie-Entdeckungsmittel (20) einen Datenlinkschicht-User implementiert und über die Datenlinkschicht (18) Mitteilungen an ein oder mehrere Fernnetzwerkelemente des Datennetzwerks erzeugt, um ein oder mehrere Netzwerkelement-Identifikationsdaten an das eine oder die mehreren Fernnetzwerkelemente zu übermitteln, und wobei die besagten Netzwerkelement-Identifikationsdaten Informationen über eine Vielzahl von Schichten (16, 18) der hierarchischen Topologie-Schichtstruktur übermitteln.

2. Ein rechnerlesbares Datenspeichermedium nach Anspruch 1, wobei das besagte Topologie-Entdeckungsmittel (20) so konfiguriert ist, dass es Mitteilungen von einem oder mehreren Fernnetzwerkelementen, von denen Netzwerk-Topologiedaten bezogen werden können, empfängt und bearbeitet.

3. Ein rechnerlesbares Datenspeichermedium nach Anspruch 1 oder 2, wobei das besagte Topologie-Entdeckungsmittel (20) eine logische Peer-to-Peer-Verbindung mit dem Topologie-Entdeckungsmittel eines Peers in einem Fernnetzwerkelement herstellen kann.

4. Ein rechnerlesbares Datenspeichermedium nach einem der voranstehenden Ansprüche 1 bis 3, wobei die die Netzwerkelement-Identifikationsdaten übertragenden Mitteilungen unter Verwendung eines nicht bestätigten Protokolls vom Host-Netzwerkelement (10, 12) über die Datenlinkschicht (18) gesendet werden.

5. Ein rechnerlesbares Datenspeichermedium nach einem der voranstehenden Ansprüche 1 bis 4, wobei die die Netzwerkelement-Identifikationsdaten übertragenden Mitteilungen vom Host-Netzwerkelement (10, 12) über einen optischen Link (14) gesendet werden.

6. Ein rechnerlesbares Datenspeichermedium nach Anspruch 5, wobei die Datenlinkschicht (18) ein LAPD-Linkschichtprotokoll verwendet und die die Netzwerkelement-Identifikationsdaten übertragenden Mitteilungen unter Verwendung von UTIS-Datenpaketen vom Host-Netzwerkelement (10, 12) gesendet werden.

7. Ein rechnerlesbares Datenspeichermedium nach Anspruch 6, wobei die UTIS-Datenpakete über einen eingebetteten Kontrollkanal (ECC) gesendet werden.

8. Ein rechnerlesbares Datenspeichermedium nach Anspruch 7, wobei das Topologie-Entdeckungsmittel (20) eine DL-UNIT-Datenlinkschichtprimitive aufruft, um die Erzeugung der UTIS-Datenpakete zu bewirken.

9. Ein rechnerlesbares Datenspeichermedium nach Anspruch 5, wobei die Datenlinkschicht (18) ein Point-to-Point (PPP) Linkschichtprotokoll verwendet und die die Netzwerkelement-Identifikationsdaten übertragenden Mitteilungen vom Host-Netzwerkelement (10, 12) unter Verwendung von LAPD-UTIS-Datenpaketen gesendet werden.

10. Ein rechnerlesbares Datenspeichermedium nach einem der voranstehenden Ansprüche 1 bis 9, wobei das besagte Topologie-Entdeckungsmittel (20) eine Managementeinheit (24) und eine mit der besagten Managementeinheit (24) kommunizierenden Topologie-Entdeckungslogik (22) implementiert, wobei die besagte Managementeinheit (24) implementiert wird, um eine Kontrollfunktion über die besagte Topologie-Entdeckungslogik (22) auszuüben.

11. Ein rechnerlesbares Datenspeichermedium nach Anspruch 10, wobei die besagte Topologie-Entdeckungslogik eine Topologie-Entdeckungsmaschine (28) zur Steuerung der Erzeugung der die Netzwerkelement-Identifikationsdaten übertragenden Mitteilungen implementiert.

12. Ein rechnerlesbares Datenspeichermedium nach Anspruch 10 oder 11, wobei die Datenlinkschicht (18) vorbestimmte Primitive verwendet, die besagte Topologie-Entdeckungslogik eine Datenlinkschichtoberfläche (26) implementiert und die besagte Datenlinkschichtoberfläche (26) Aufforderungen oder Mitteilungen von der besagten Topologie-Entdeckungsmaschine (29) auf Primitiven der Datenlinkschicht (18) abbildet.

13. Ein rechnerlesbares Datenspeichermedium nach Anspruch 12, wobei die besagte Topologie-Entdeckungslogik (22) ein Managementkontrollsystem (30) zur Steuerung und Konfigurierung der besagten Topologie-Entdeckungsmaschine (28) implementiert.

14. Ein rechnerlesbares Datenspeichermedium nach Anspruch 13, wobei die besagte Topologie-Entdeckungslogik (22) eine lokale Datenbank (32) zur Speicherung von Netzwerk-Topologiedaten implementiert.

15. Ein rechnerlesbares Datenspeichermedium nach Anspruch 10, wobei die besagte Topologie-Entdeckungslogik (22) einen Timer zur regelmäßigen Erzeugung von Timer-Events implementiert und die besagte Topologie-Entdeckungslogik (22) auf einen Timer-Event reagierend Netzwerkelement-Identifikationsdaten übertragende Mitteilungen erzeugt.

16. Eine Methode für die Topologie-Entdeckung in einem ein Topologie-Entdeckungsmittel (20) umfassendes Host-Netzwerkelement (10, 12), wobei das Host-Netzwerkelement (10, 12) so konfiguriert ist, dass es eine hierarchische Topologie-Schichtstruktur implementiert, und wobei das Host-Netzwerkelement (10, 12) eine Datenlinkschicht (18) umfasst und so konfiguriert ist, dass es über die besagte Datenlinkschicht (18) mit anderen Netzwerkelementen in einem Datennetzwerk kommunizieren kann, und wobei die besagte Methode:
das besagte Topologie-Entdeckungsmittel (20) umfasst;
einen Datenlinkschicht-User im Host-Netzwerkelement (10, 12) implementiert und
bewirkt, dass der besagte Datenlinkschicht-User mit der Datenlinkschicht (18) zusammenarbeitet, um zu veranlassen, dass die Datenlinkschicht (18) über die Datenlinkschicht (18) Mitteilungen an ein oder mehrere Fernnetzwerkelemente des Datennetzwerkes übermittelt, um ein oder mehrere Netzwerkelement-Identifikationsdaten an ein oder mehrere Fernnetzwerkelemente zu übermitteln, und wobei die besagten Netzwerkelement-Identifikationsdaten Informationen über eine Vielzahl von Schichten (16, 18) der hierarchischen Topologie-Schichtstruktur übermitteln.

17. Ein Host-Netzwerkelement (10, 12) zur Verwendung in einem Datennetzwerk, wobei das Host-Netzwerkelement (10, 12) so konfiguriert ist, dass es eine hierarchische Topologie-Schichtstruktur implementiert und mit anderen Netzwerkelementen in einem Datennetzwerk kommuniziert, und wobei das besagte Host-Netzwerkelement (10, 12) weiter ein Topologie-Entdeckungsmittel (20) umfasst, das so konfiguriert ist, dass es einen Datenlinkschicht-User implementiert und Mitteilungen über die Datenlinkschicht (18) an ein oder mehrere Fernnetzwerkelemente des Datennetzwerks erzeugt, um Netzwerkelement-Identifikationsdaten an das eine oder die mehreren Fernnetzwerkelemente zu übermitteln, wobei die besagten Netzwerkelement-Identifikationsdaten so angeordnet sind, dass sie Informationen über eine Vielzahl von Schichten der hierarchischen Topologie-Schichtstruktur übermitteln.

18. Ein Host-Netzwerkelement (10, 12) nach Anspruch 17, wobei das besagte Topologie-Entdeckungsmittel (20) so konfiguriert ist, dass es Mitteilungen von einem oder mehreren Fernnetzwerkelementen, von denen Netzwerk-Topologiedaten bezogen werden können, empfängt und bearbeitet.

19. Ein Host-Netzwerkelement (10, 12) nach Anspruch 17 oder 18, wobei das besagte Topologie-Entdeckungsmittel (20) so konfiguriert ist, dass es eine logische Peer-to-Peer-Verbindung mit dem Topologie-Entdeckungsmittel eines Peers in einem Fernnetzwerkelement herstellt.

20. Ein Host-Netzwerkelement (10, 12) nach einem der voranstehenden Ansprüche 17 bis 19, wobei das Host-Netzwerkelement (10, 12) so konfiguriert ist, dass es die die Netzwerkelement-Identifikationsdaten übertragenden Mitteilungen unter Verwendung eines nicht bestätigten Protokolls vom Host-Netzwerkelement (10, 12) über die Datenlinkschicht (18) sendet.

21. Ein Host-Netzwerkelement (10, 12) nach einem der voranstehenden Ansprüche 17 bis 20, wobei das Host-Netzwerkelement (10, 12) so konfiguriert ist, dass es die die Netzwerkelement-Identifikationsdaten übertragenden Mitteilungen vom Host-Netzwerkelement (10, 12) über einen optischen Link (14) sendet.

22. Ein Host-Netzwerkelement (10, 12) nach Anspruch 21, wobei die Datenlinkschicht (18) so konfiguriert ist, dass sie ein LAPD-Linkschichtprotokoll verwendet und das Host-Netzwerkelement (10, 12) so konfiguriert ist, dass es die die Netzwerkelement-Identifikationsdaten übertragenden Mitteilungen unter Verwendung von UTIS-Datenpaketen sendet.

23. Ein Host-Netzwerkelement (10, 12) nach Anspruch 22, wobei das Host-Netzwerkelement (10, 12) so konfiguriert ist, dass es die UTIS-Datenpakete über einen eingebetteten Kontrollkanal (ECC) sendet.

24. Ein Host-Netzwerkelement (10, 12) nach Anspruch 23, wobei das Topologie-Entdeckungsmittel (20) so konfiguriert ist, dass es eine DL-UNIT-Datenlinkschichtprimitive aufruft, um die Erzeugung der UTIS-Datenpakete zu bewirken.

25. Ein Datennetzwerk bestehend aus einer Vielzahl von Host-Netzwerkelementen (10, 12) nach einem der voranstehenden Ansprüche 17 bis 24, wobei jedes besagte Host-Netzwerkelement (10, 12) so konfiguriert ist, dass es mit anderen Netzwerkelementen im Datennetzwerk kommunizieren kann.

## Revendications

1. Support de stockage lisible par ordinateur contenant un élément de programme à exécuter par un dispositif informatique dans un élément de réseau hôte (10, 12) afin d'implémenter un agent de découverte de topologie (20), l'élément de réseau hôte (10, 12) implémentant une structure de couche de topologie hiérarchique, l'élément de réseau hôte (10, 12) pouvant communiquer sur une couche liaison de données (18) avec d'autres éléments de réseau dans un réseau de données, ledit agent de découverte de topologie (20) implémentant un utilisateur de couche liaison de données, ledit agent de découverte de topologie (20) pouvant générer des messages vers un ou plusieurs éléments de réseau à distance du réseau de données via la couche liaison de données (18) afin de transporter vers l'un ou plusieurs éléments de réseau à distance des informations d'identification d'élément de réseau, lesdites informations d'identification d'élément de réseau transportant des informations concernant une pluralité de couches (16, 18) de la structure de couche de topologie hiérarchique.

2. Support de stockage lisible par ordinateur selon la revendication 1, dans lequel ledit agent de découverte de topologie (20) peut recevoir et traiter des messages provenant d'un ou plusieurs éléments de réseau à distance, à partir desquels il est possible de dériver des informations de topologie de réseau.

3. Support de stockage lisible par ordinateur selon la revendication 1 ou 2, dans lequel ledit agent de découverte de topologie (20) peut établir une liaison logique pair à pair avec un agent de découverte de topologie pair dans un élément de réseau à distance.

4. Support de stockage lisible par ordinateur selon l'une quelconque des revendications 1 à 3, dans lequel les messages transportant des informations d'identification d'élément de réseau sont envoyés par l'élément de réseau hôte (10, 12) via la couche liaison de données (18) en utilisant un protocole non acquitté.

5. Support de stockage lisible par ordinateur selon l'une quelconque des revendications 1 à 4, dans lequel les messages transportant des informations d'identification d'élément de réseau sont envoyés par l'élément de réseau hôte (10, 12) sur une liaison optique (14).

6. Support de stockage lisible par ordinateur selon la revendication 5, dans lequel la couche liaison de données (18) utilise un protocole de couche de liaison LAPD, et les messages transportant des informations d'identification d'élément de réseau sont envoyés par l'élément de réseau hôte (10, 12) en utilisant des paquets de données UTIS.

7. Support de stockage lisible par ordinateur selon la revendication 6, dans lequel les paquets de données UTIS sont envoyés sur un canal de commande intégré.

8. Support de stockage lisible par ordinateur selon la revendication 7, dans lequel l'agent de découverte de topologie (20) demande à une primitive de couche de liaison DL-UNIT DATA de générer les paquets de données UTIS.

9. Support de stockage lisible par ordinateur selon la revendication 5, dans lequel la couche liaison de données (18) utilise un protocole de couche de liaison point à point (PPP), et les messages transportant des informations d'identification d'élément de réseau sont envoyés par l'élément de réseau hôte (10, 12) en utilisant des paquets de données LAPD UTIS.

10. Support de stockage lisible par ordinateur selon l'une quelconque des revendications 1 à 9, dans lequel ledit agent de découverte de topologie (20) implémente une entité de gestion (24) et une logique de découverte de topologie (22) en communication avec ladite entité de gestion (24), ladite entité de gestion (24) étant implémentée pour assurer une fonction de commande sur ladite logique de découverte de topologie (22).

11. Support de stockage lisible par ordinateur selon la revendication 10, dans lequel ladite logique de découverte de topologie implémente un moteur de découverte de topologie (28) permettant de commander la génération de messages transportant des informations d'identification d'élément de réseau.

12. Support de stockage lisible par ordinateur selon la revendication 10 ou 11, dans lequel la couche liaison de données (18) utilise des primitives prédéterminées, ladite logique de découverte de topologie implémente une interface de couche liaison de données (26), ladite interface de couche liaison de données (26)o pouvant mettre en correspondance des requêtes ou messages dudit moteur de découverte de topologie (28) à la couche liaison de données (18).

13. Support de stockage lisible par ordinateur selon la revendication 12, dans lequel ladite logique de découverte de topologie (22) implémente une unité de commande de gestion (30) permettant de commander et de configurer ledit moteur de découverte de topologie (28).

14. Support de stockage lisible par ordinateur selon la revendication 13, dans lequel ladite logique de découverte de topologie (22) implémente une base de données locale (32) permettant de stocker des informations de topologie de réseau.

15. Support de stockage lisible par ordinateur selon la revendication 10, dans lequel ladite logique de découverte de topologie (22) implémente un temporisateur générant périodiquement des événements de temporisateur, ladite logique de découverte de topologie (22) générant des messages transportant des informations d'identification d'élément de réseau en réponse à un événement de temporisateur.

16. Procédé d'exécution d'une découverte de topologie dans un élément de réseau hôte (10, 12) ayant un agent de découverte de topologie (20), l'élément de réseau hôte (10, 12) pouvant implémenter une structure de couche de topologie hiérarchique, l'élément de réseau hôte ayant une couche liaison de données (18) et pouvant communiquer sur ladite couche liaison de données (18) avec d'autres éléments de réseau dans un réseau de données, ledit procédé comprenant des étapes dans lesquels ledit agent de découverte de topologie (20) :
implémente un utilisateur de couche liaison de données dans l'élément de réseau hôte (10, 12), et
amène ledit utilisateur de couche liaison de données à interagir avec la couche liaison de données (18), ce qui amène la couche liaison de données (18) à envoyer des messages à un ou plusieurs éléments de réseau à distance du réseau de données via la couche liaison de données (18) afin de transporter vers l'un ou plusieurs éléments de réseau à distance des informations d'identification d'élément de réseau, lesdites informations d'identification d'élément de réseau transportant des informations concernant une pluralité de couches (16, 18) de la structure de couche de topologie hiérarchique.

17. Élément de réseau hôte (10, 12) utilisé dans un réseau de données, ledit élément de réseau hôte (10, 12) pouvant implémenter une structure de couche de topologie hiérarchique, l'élément de réseau hôte (10, 12) pouvant communiquer avec d'autres éléments de réseau dans un réseau de données, l'élément de réseau hôte (10, 12) comprenant un agent de découverte de topologie (20), ledit agent de découverte de topologie (20) pouvant implémenter un utilisateur de couche liaison de données, ledit agent de découverte de topologie (20) pouvant générer des messages vers un ou plusieurs éléments de réseau à distance du réseau de données via une couche liaison de données (18) afin de transporter vers l'un ou plusieurs éléments de réseau à distance des informations d'identification d'élément de réseau, lesdites informations d'identification d'élément de réseau pouvant transporter des informations concernant une pluralité de couches de la structure de couche de topologie hiérarchique.

18. Élément de réseau hôte (10, 12) selon la revendication 17, dans lequel ledit agent de découverte de topologie (20) peut recevoir et traiter des messages provenant d'un ou plusieurs éléments de réseau à distance, à partir desquels il est possible de dériver des informations de topologie de réseau.

19. Élément de réseau hôte (10, 12) selon la revendication 17 ou 18, dans lequel ledit agent de découverte de topologie (20) peut établir une liaison logique pair à pair avec un agent de découverte de topologie pair dans un élément de réseau à distance.

20. Élément de réseau hôte (10, 12) selon l'une quelconque des revendications 17 à 19, dans lequel l'élément de réseau hôte (10, 12) peut envoyer les messages transportant des informations d'identification d'élément de réseau, de l'élément de réseau hôte (10, 12) via la couche liaison de données (18) en utilisant un protocole non acquitté.

21. Élément de réseau hôte (10, 12) selon l'une quelconque des revendications 17 à 20, dans lequel l'élément de réseau hôte (10, 12) peut envoyer les messages transportant des informations d'identification d'élément de réseau, de l'élément de réseau hôte (10, 12) sur une liaison optique (14).

22. Élément de réseau hôte (10, 12) selon la revendication 21, dans lequel la couche liaison de données (18) peut utiliser un protocole de couche de liaison LAPD, et l'élément de réseau hôte (10, 12) peut envoyer les messages transportant des informations d'identification d'élément de réseau en utilisant des paquets de données LAPD UTIS.

23. Élément de réseau hôte (10, 12) selon la revendication 22, dans lequel l'élément de réseau hôte (10, 12) peut envoyer les paquets de données UTIS sur un canal de commande intégré.

24. Élément de réseau hôte (10, 12) selon la revendication 23, dans lequel l'agent de découverte de topologie (20) peut demander à une primitive de couche de liaison DL-UNIT DATA de générer les paquets de données UTIS.

25. Réseau de données comprenant une pluralité d'élément de réseau hôte (10, 12) selon l'une quelconque des revendications 17 à 24, chacun desdits éléments de réseau hôte (10, 12) pouvant communiquer avec d'autres éléments de réseau dans le réseau de données
